# EUROPEAN PATENT SPECIFICATION

(11) **EP 1 589 778 B1**
(45) Date of publication and mention of the grant of the patent: **06.06.2007**
(21) Application number: 05008678.4
(22) Date of filing: 20.04.2005
(51) Int. Cl.: H04Q 7/38

(54) **Mobile communication terminal**
Mobiles Kommunikationsendgerät
Terminal de communication mobile

(30) Priority: 21.04.2004 JP 2004125965; 19.04.2005 JP 2005121352
(43) Date of publication of application: 26.10.2005
(73) Proprietor: NTT DoCoMo, Inc., Tokyo 100-6150 (JP); Super Wave Corporation, Minato-ku Tokyo 105 0013 (JP)
(72) Inventor: Ishikawa, Hironori, NTT DoCoMo Inc., Chiyoda-ku Tokyo 100-6150 (JP); Murata, Mitsuru, NTT DoCoMo Inc., Chiyoda-ku Tokyo 100-6150 (JP); Sasakura, Toyoki c/o Super Wave Corporation, Minato-ku, Tokyo 105-0013 (JP); Miyamoto, Kenichi c/o Super Wave Corporation, Minato-ku, Tokyo 105-0013 (JP)
(74) Representative: Grosse, Wolfgang

(56) References cited:
- EP-A- 1 164 555
- FR-A- 2 822 277
- GB-A- 2 318 671
- US-A1- 2003 083 044
- US-A1- 2003 117 316

## Description

### BACKGROUND OF THE INVENTION

### Field of the Invention

The present invention relates to a mobile communication terminal, such as a cell-phone handset.

### Related Background Art

In combination with spread of mobile communication terminals such as cell-phone handsets, the mobile communication terminals are becoming increasingly sophisticated. Recently, there has been realizing a mobile communication terminal with which an electronic payment can be performed by sending the credit card information stored in the memory or the electronic money to an external device.

In such circumstances where a mobile communication terminal is treated as the same as cash or a credit card, theft or loss of mobile communication terminals is an extremely serious problem. As a technology for searching a lost or stolen mobile communication terminal, a mobile communication terminal as described in Japanese Patent Application Laid-Open No. 2001-275163, for example, is known. This mobile communication terminal notifies the network of its own location information immediately before the battery shuts off or the power is turned off. In this case, a lost or stolen mobile communication terminal is searched using the location information notified to the network.

US 2003/0117316 A1 describes a system for locating and tracking a wireless device, wherein the device transmits its location at predetermined intervals to a central database; if misplaced or stolen, the owner of the device may request location information from the database.

US 2003/0083044 A1 describes a security system for a portable device, wherein a transmitter unit sends regularly a short-range signal to the portable device, if the device fails to receive the signal, then a blocking mode thereof is activated.

### SUMMARY OF THE INVENTION

However, from a standpoint of the search in the case of a lost or stolen mobile communication terminals, the conventional mobile communication terminal described above has a problem as indicated hereinbelow. Specifically, the above-described conventional mobile communication terminal notifies the network of its own location information immediately before the battery shuts off or the power is turned off. Accordingly, the network cannot acquire the location information until the battery of the mobile communication terminal shuts off or someone turns off the power of the mobile communication terminal. As a result, when the mobile communication terminal is lost, misplaced or stolen, a user of the above-described conventional mobile communication terminal cannot find the mobile communication terminal promptly.

The issue of the present invention therefore is to solve the problem described above and to provide a mobile communication terminal which can be found promptly when it is lost, misplaced or stolen.

In order to solve the above issue, the mobile communication terminal of the present invention comprises transmitting means for transmitting location information of the mobile communication terminal to a predetermined transmission destination, consisting means adapted to request for transmission of ID information of a communication terminal on a regular basis, and for receiving ID information transmitted from the communication terminal; wherein the transmitting means are for transmitting location information of the mobile communication terminal to the predeterminated transmission destination when said ID information is no longer received by said communicating means.

When the mobile communication terminal is moved a fixed distance or more away from the communication terminal, the signal transmitted from the communication terminal fades, thus the signal cannot be received by the mobile communication terminal. Specifically, when the mobile communication terminal cannot receive this signal, it is highly possible that the mobile communication terminal be moved a fixed distance or more away from the communication terminal. In other words, if the user always carries the communication terminal around with him/her, the location information of the mobile communication terminal is transmitted to a predetermined transmission destination in the case where the mobile communication terminal is moved a fixed distance or more away from the user due to misplacement or theft. Further, by placing the communication terminal in a specific place, the location information of the mobile communication terminal is transmitted to a predetermined transmission destination in the case where the mobile communication terminal is carried off to some place and thereby moved a fixed distance or more away from the specific place. As a result, this mobile communication terminal can be found promptly when being lost, misplaced or stolen.

Moreover, in the mobile communication terminal of the present invention, it is preferred that it further comprise function restricting means for restricting its own function when the above-described signal is no longer received by the receiving means.

By restricting the function of the mobile communication terminal when the signal transmitted from the communication terminal is no longer received, unauthorized use of the mobile communication terminal by a thief or a finder can be prevented.

Further, in the mobile communication terminal of the present invention, it is preferred that the transmitting means transmits the location information of the mobile communication terminal to the transmission destination on regular basis when the signal is no longer received by the receiving means.

By transmitting the location information of the mobile communication terminal to a predetermined transmission destination on regular basis when the signal transmitted from the communication terminal is no longer received, even in the case where the mobile communication terminal is moved by being stolen or picked up, the user of the mobile communication terminal or the manager of the network can be kept informed about the location of the mobile communication terminal on the basis of the location information transmitted regularly from the mobile communication terminal.

Furthermore, in the mobile communication terminal of the present invention, it is preferred that the receiving means regularly transmits to the communication terminal a request for transmission of the signal, and receives the signal transmitted from the communication terminal in response to the request for transmission.

If the mobile communication terminal regularly transmits to the communication terminal a request for transmission of the signal, it is only necessary for the communication terminal to transmit the signal in response to the request for transmission, and it is no longer necessary to provide the communication terminal with a function of voluntarily transmitting the signal on regular basis.

Furthermore, the mobile communication terminal according to the present invention may be constituted such that the mobile communication terminal further comprises acquiring means for acquiring the location information of the mobile communication terminal before the signal is no longer received by the receiving means, and that, when the signal is no longer received by the receiving means, the transmitting means transmits to the transmission destination the location information of the mobile communication terminal which is acquired by the acquiring means.

According to the present invention, the location information transmitted to a transmission destination is information which is acquired before the mobile communication terminal no longer receives the signal, that is, before it is detected that the mobile communication terminal is moved away from the communication terminal. Therefore, the mobile communication terminal can transmit its own location information to the transmission destination even under circumstances where the location cannot be spotted when the signal transmitted from the communication terminal on regular basis is no longer received.

The mobile communication terminal of the present invention receives a signal transmitted from the communication terminal on regular basis, and transmits its own location information to a predetermined transmission destination when the signal is no longer received. In other words, if the user always carries the communication terminal around with him/her, the location information of the mobile communication terminal is transmitted to a predetermined transmission destination in the case where the mobile communication terminal is moved a fixed distance or more away from the user due to misplacement or theft. Further, by placing the communication terminal in a specific place, the location information of the mobile communication terminal is transmitted to a predetermined transmission destination in the case where the mobile communication terminal is carried off to some place and thereby moved a fixed distance or more away from the specific place. As a result, this mobile communication terminal can be found promptly when being lost, misplaced or stolen.

### BRIEF DESCRIPTION OF THE DRAWINGS

Fig. 1 is a block diagram of a network system which includes a mobile communication terminal;
Fig. 2 is a block diagram of the mobile communication terminal;
Fig. 3 is a figure showing an operation of the mobile communication terminal; and
Fig. 4 is a figure showing an operation of the mobile communication terminal in a modified form.

### DESCRIPTION OF THE PREFERRED EMBODIMENTS

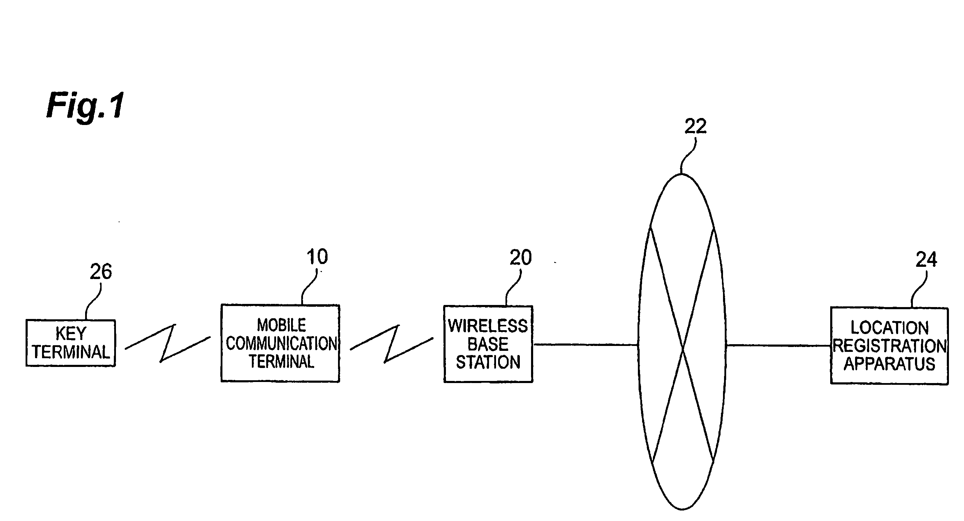

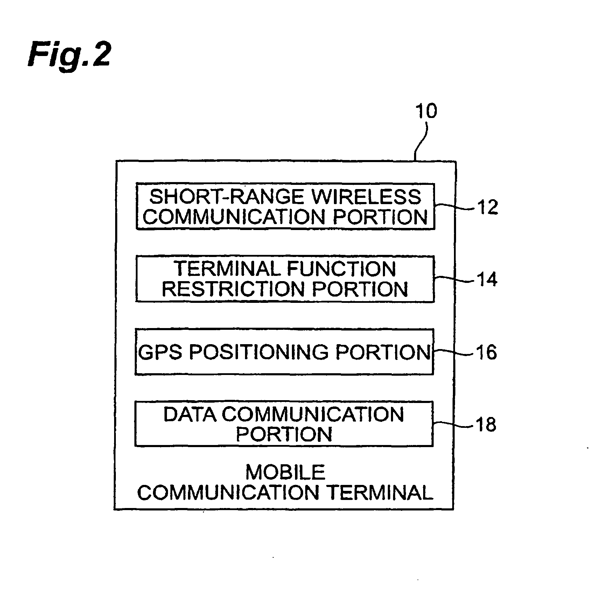

Embodiments of the mobile communication terminal of the present invention will now be described using the drawings.
First, the constitution of the mobile communication terminal of the present embodiment is described. Fig. 1 is a block diagram of a network system which includes the mobile communication terminal of the present embodiment. Also, Fig. 2 is a system block diagram of the mobile communication terminal of the present embodiment.

A mobile communication terminal 10 is, as shown in Fig. 1, connected to a mobile communications network 22 via a wireless base station 20. Specifically, the mobile communication terminal 10 can perform data communication or voice communication with other mobile communication terminals or a server device that are connected to the mobile communications network 22 through the wireless base station 20. Such a mobile communication terminal includes a cell-phone handset and PHS.

A location registration apparatus 24 is connected to the mobile communications network 22. The location registration apparatus 24 is physically constituted as a computer which is equipped with a CPU (Central Processing Unit), memory, storage means such as a hard disk or optical disk, communication means such as a data transmission unit etc., and the like, and receives and stores location information which is transmitted from the mobile communication terminal 10.

The mobile communication terminal 10 is further designed so as to be able to perform communication with a key terminal 26 by means of a short-range wireless communication standard such as Bluetooth. Here, the key terminal 26 is a terminal device which has a short-range wireless communication function.

As shown in Fig. 2, the mobile communication terminal 10 comprises a short-range wireless communication portion 12 (receiving means), a terminal function restriction portion 14 (function restricting means), a GPS positioning portion 16 (acquiring means), and a data communication portion 18 (transmitting means). Hereinafter each of these components is described in detail.

The short-range wireless communication portion 12 transmits the ID information of the mobile communication terminal 10 and a request for transmission of the ID information of the key terminal 26, to the key terminal 26 on regular basis. The short-range wireless communication portion 12 also receives the ID information of the key terminal 26 which is transmitted on regular basis from the key terminal 26, in response to the above-described request for transmission. Particularly, the short-range wireless communication portion 12 not only transmits the abovementioned ID information and the request for transmission through the short-range wireless communication standard such as Bluetooth, but also receives the abovementioned ID information transmitted from the key terminal 26, by means of such short-range wireless communication standard as Bluetooth likewise.

Further, when the short-range wireless communication portion 12 no longer receives the ID information transmitted from the key terminal 26, the short-range wireless communication portion 12 notifies the terminal function restriction portion 14 and GPS positioning portion 16 of that effect. Specifically, the short-range wireless communication portion 12 starts a time count by means of a timer once transmitting the above-described ID information and request for transmission to the key terminal 26, and, when the short-range wireless communication portion 12 can no longer receive the ID information from the key terminal 26 even after the elapse of a certain period of time (i.e. after the time is out), notifies the terminal function restriction portion 14 and GPS positioning portion 16 of that effect (time-out).

The terminal function restriction portion 14 restricts the function of the mobile communication terminal 10 when the ID information transmitted from the key terminal 26 is no longer received by the short-range wireless communication portion 12. More specifically, when receiving the time-out notification from the short-range wireless communication portion 12, the terminal function restriction portion 14 stops the operations of a key input accept function, a display function, a function of displaying the personal data such as an address book, a function of accessing an IC chip in which electronic money or credit card information is stored, a communication function, a function of communicating with a communication destination other than a specific communication destination (for example, the location registration apparatus 24), and other operations of the specific functions that are set in advance by the user.

The GPS positioning portion 16 acquires the location information of the mobile communication terminal 10 by using a GPS system, when the ID information transmitted from the key terminal 26 is no longer received by the short-range wireless communication portion 12, that is, when the time-out notification is received from the short-range wireless communication portion 12. Further, the GPS positioning portion 16 acquires the location information of the mobile communication terminal 10 more than once or on regular basis (for example, on an every hour basis) when the ID information transmitted from the key terminal 26 is no longer received by the short-range wireless communication portion 12.

When the ID information transmitted from the key terminal 26 is no longer received by the short-range wireless communication portion 12, the data communication portion 18 transmits the location information of the mobile communication terminal 10 positioned by the GPS positioning portion 16 to the location registration apparatus 24 which is a predetermined transmission destination. In this case, the data communication portion 18 transmits the above-described location information to the location registration apparatus 24 through the wireless base station 20 and the mobile communications network 22. Further, the data communication portion 18 transmits the location information of the mobile communication terminal 10, which is positioned by the GPS positioning portion 16, to the location registration apparatus 24 more than once or on regular basis (for example, on an every hour basis) when the ID information transmitted from the key terminal 26 is no longer received by the short-range wireless communication portion 12.

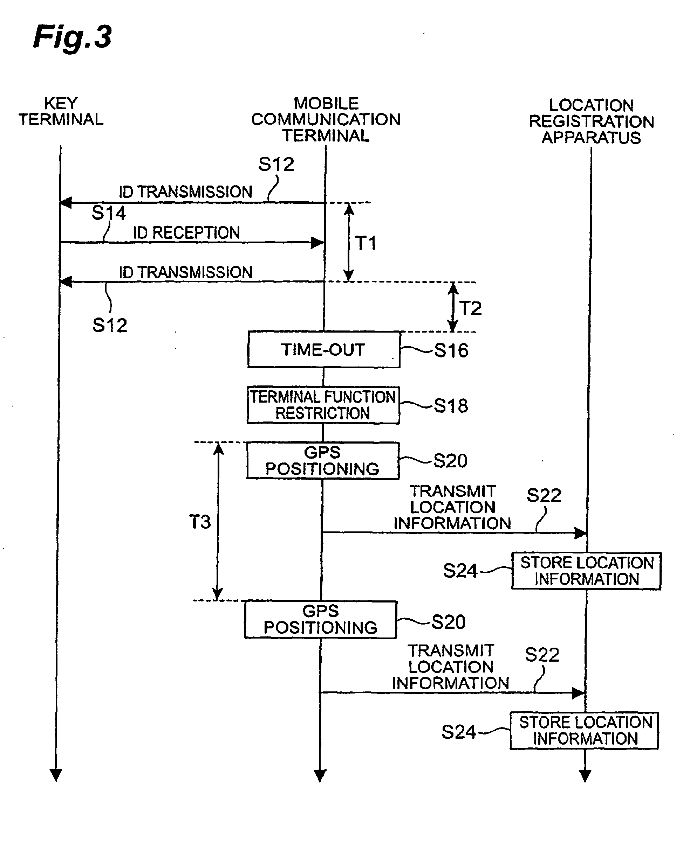

Next, the operation of the mobile communication terminal of the present embodiment is now described. Fig. 3 is a figure showing an operation of the mobile communication terminal.

When the power of the mobile communication terminal 10 is ON, the ID information of the mobile communication terminal 10 and a request for transmission of the ID information of the key terminal 26 are transmitted from the short-range wireless communication portion 12 at regular cycle intervals T1 (five minutes, for example). The ID information of the mobile communication terminal 10 and the request for transmission of the ID information of the key terminal 26 that are transmitted in this manner are received by the key terminal 26 (S12).

The ID information of the mobile communication terminal 10 and the request for transmission of the ID information of the key terminal 26 are received by the key terminal 26, in response to which the ID information of the key terminal 26 is transmitted from the key terminal 26. The ID information of the key terminal 26, which is transmitted in this manner, is received by the short-range wireless communication portion 12 of the mobile communication terminal 10 (S14).

Here, a time count is started by a timer as soon as the ID information of the mobile communication terminal 10 and the request for transmission of the ID information of the key terminal 26 are transmitted from the short-range wireless communication portion 12 of the mobile communication terminal 10. When the ID information is not received from the key terminal 26 even after the elapse of a certain period of time T2 from the transmission of the ID information and the request for transmission (i.e. when the time is out), the terminal function restriction portion 14 and GPS positioning portion 16 are notified of that effect (time-out) (S16).

When the time-out notification is given to the terminal function restriction portion 14 from the short-range wireless communication portion 12, the terminal function restriction portion 14 performs control for restricting the function of the mobile communication terminal 10 (S18). More specifically, control for stopping the operations of the specific functions, such as the key input accept function, display function, function of accessing an IC chip in which electronic money or credit card information is stored, communication function and the like, are performed.

Moreover, when the time-out notification is given to the GPS positioning portion 16 from the short-range wireless communication portion 12, the location information of the mobile communication terminal 10 is acquired by the GPS positioning portion 16 (S20).

The location information of the mobile communication terminal 10 which is obtained by the GPS positioning portion 16 is transmitted to the location registration apparatus 24, which is the predetermined transmission destination, by the data communication portion 18, and received by the location registration apparatus 24 (S22). Further, the location information of the mobile communication terminal 10 which is received by the location registration apparatus 24 is stored in the storage means provided in the location registration apparatus 24 (S24).

Here, acquisition of the location information of the mobile communication terminal 10 by the GPS positioning portion 16 (S20), transmission of the location information from the data communication portion 18 to the location registration apparatus 24 (S22), and storage of the location information in the location registration apparatus 24 (S24) are repeated at regular cycle intervals T3 (one hour, for example).

Next, the action and effect of the mobile communication terminal of the present embodiment will now be explained. When the mobile communication terminal 10 is moved a fixed distance or more away from the key terminal 26, the signal transmitted from the key terminal 26 fades, thus the signal cannot be received by the mobile communication terminal 10. Specifically, when the mobile communication terminal 10 cannot receive this signal, it is highly possible that the mobile communication terminal 10 be moved a fixed distance or more away from the key terminal 26.

In view of the above matters, in the mobile communication terminal 10 of the present embodiment, when the short-range wireless communication portion 12 can no longer receive the ID information transmitted from the key terminal 26, the GPS positioning portion 16 acquires the location information of the mobile communication terminal 10, and the data communication portion 18 transmits this location information to the location registration apparatus 24. In other words, if the user always carries the key terminal 26 around with him/her, the location information of the mobile communication terminal 10 is transmitted to the location registration apparatus 24 in the case where the mobile communication terminal 10 is moved a fixed distance or more away from the user due to misplacement or theft. Further, by placing the key terminal 26 in a specific place, the location information of the mobile communication terminal 10 is transmitted to the location registration apparatus 24 in the case where the mobile communication terminal 10 is carried off to some place and thereby moved a fixed distance or more away from the specific place. As a result, the mobile communication terminal 10 can be found promptly when being lost, misplaced or stolen.

Furthermore, in the mobile communication terminal 10 of the present embodiment, when the short-range wireless communication portion 12 can no longer receive the ID information transmitted from the key terminal 26, the terminal function restriction portion 14 restricts the function of the mobile 10. Therefore, unauthorized use of the mobile communication terminal 10 by a thief or a finder can be prevented.

Moreover, in the mobile communication terminal 10 of the present embodiment, when the short-range wireless communication portion 12 can no longer receive the ID information transmitted from the key terminal 26, acquisition of the location information by the GPS positioning portion 16 and transmission of the location information by the data communication portion 18 are repeated a plurality of times on regular basis. Therefore, even in the case where the mobile communication terminal 10 is stolen or picked up and moved, the user of the mobile communication terminal 10 or the manager of the network can be kept informed about the location of the mobile communication terminal 10 on the basis of the location information transmitted regularly from the mobile communication terminal 10 to the location registration apparatus 24. As a result, even in the case where the mobile communication terminal 10 is stolen or picked up and moved, the mobile communication terminal 10 can be found.

Also in the mobile communication terminal 10 of the present embodiment, the short-range wireless communication portion 12 regularly transmits to the key terminal 26 a request for transmission of the ID information, and receives the ID information transmitted from the key terminal 26, in response to this request for transmission. Therefore, it is only necessary for the key terminal 26 to transmit the ID information in response to the request for transmission which is transmitted from the mobile communication terminal 10, and it is no longer necessary to provide the key terminal 26 with a function of voluntarily transmitting the ID information on regular basis. As a result, the key terminal 26 can be constituted simply.

Various modified forms are conceivable in the mobile communication terminal 10 of the above embodiment. For example, in the mobile communication terminal 10 of the above embodiment, when the short-range wireless communication portion 12 can no longer receive the ID information transmitted from the key terminal 26, the GPS positioning portion 16 acquires the location information of the mobile communication terminal 10, and the data communication portion 18 transmits this location information to the location registration apparatus 24. However, the GPS positioning portion 16 may acquire the location information of the mobile communication terminal 10 and store it in the memory on regular basis, and when the short-range wireless communication portion 12 can no longer receive the ID information transmitted from the key terminal 26, the data communication portion 18 may read out the location information stored in the memory and transmit it to the location registration apparatus 24.

Further, in the mobile communication terminal 10 of the above embodiment, although the GPS positioning portion 16 acquires the location information of the mobile communication terminal 10 by using the GPS system, the location information of the mobile communication terminal 10 may be acquired by another means. For example, the ID information of the wireless base station 20 which is included in annunciation information transmitted from the wireless base station 20 may be taken as the location information of the mobile communication terminal 10. When taking the ID information of the wireless base station 20 as the location information of the mobile communication terminal 10, although location accuracy thereof is lower than the location information acquired using the GPS system, it is no longer necessary to mount the GPS system on each mobile communication terminal 10, thus the mobile communication terminal 10 can be constituted simply.

In the above embodiment, a constitution may be provided such that the key terminal 26 voluntarily transmits the ID information to the mobile communication terminal on regular basis. By using the key terminal 26 as above, the short-range wireless communication portion 12 of the mobile communication terminal 10 no longer needs to transmit to the key terminal 26 the ID information of the mobile communication terminal 10 and the request for transmission of the ID information of the key terminal 26.

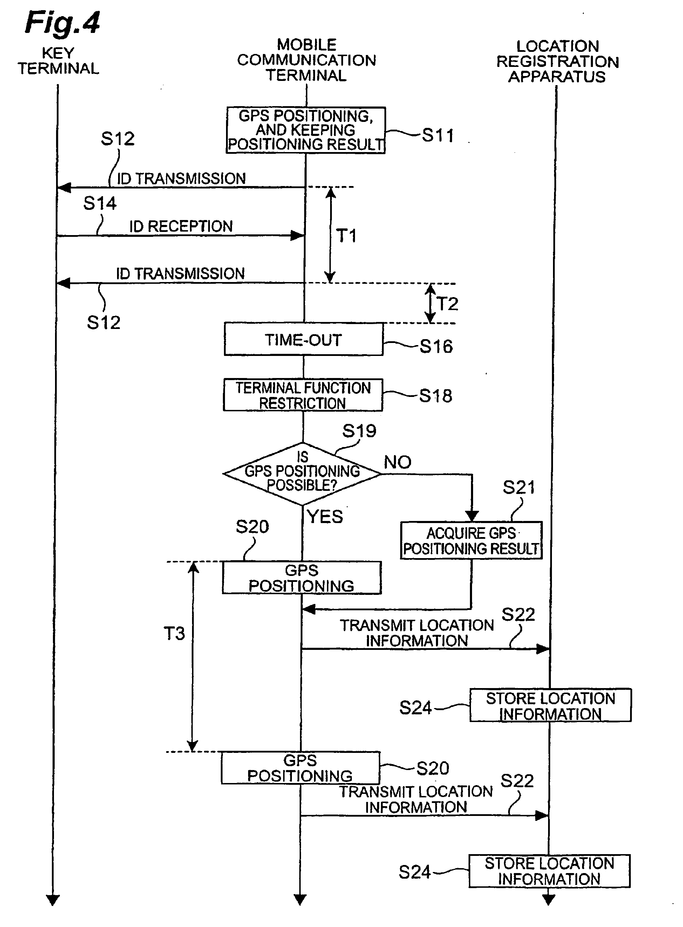

Furthermore, in the above embodiment, GPS position performed by the mobile communication terminal 10 (S20 shown in Fig. 3) is performed after the function of the terminal is restricted (S18 in the same figure). However, as shown in S11 of Fig. 4, the mobile communication terminal 10 may perform GPS positioning on regular basis prior to the terminal function restriction and keep an obtained positioning result. In such form, the mobile communication terminal 10 judges whether it is possible to perform GPS positioning after the terminal function restriction (S19), and if it is possible, the transition is made to the process that follows the above-described S20. If positioning cannot be performed (S19; NO), the mobile communication terminal 10 acquires the GPS positioning result kept beforehand in S11 (S21), and transmits it as the location information to the location registration apparatus 24 (S22).

According to the above-described modified form, the mobile communication terminal 10 performs positioning of its own terminal earlier than when the function is restricted, that is, earlier than when it is detected that the mobile communication terminal 10 was moved away from the key terminal 26. For this reason, the mobile communication terminal 10 can transmit the location information even when the mobile communication terminal 10 is in a region where positioning is impossible upon the function restriction. Concretely, even in the case where the place in which the mobile communication terminal 10 and the key terminal 26 are away from each other is a place in which a connection to the wireless base station 20 is possible but positioning by the GPS is impossible, the most recent positioning result can be notified to the location registration apparatus 24. Accordingly, even when the user loses or misplaces the mobile communication terminal 10 indoors, or even when the mobile communication terminal 10 is stolen, the location registration apparatus 24 can promptly identify a place near the actual location of the mobile communication terminal 10. As a result, the mobile communication terminal 10 can be found promptly.

From the invention thus described, it will be obvious that the embodiments of the invention may be varied in many ways. Such variations are not to be regarded as a departure from the scope of the invention, and all such modifications as would be obvious to one skilled in the art are intended for inclusion within the scope of the following claims.

## Claims

1. A mobile communication terminal (10), comprising:
transmitting means (18) for transmitting location information of the mobile communication terminal to a predetermined transmission destination (24) **characterized by** communicating means (12) adapted to request for transmission of ID information of a communication terminal (26) on a regular basis, and for receiving ID information transmitted from the communication terminal (26); and
the transmitting means (18) for transmitting location information of the mobile communication terminal to the predetermined transmission destination (24) when said ID information is no longer received by said communicating means (12).

2. The mobile communication terminal (10) according to Claim 1, further comprising function restricting means (14) for restricting the function of the mobile communication terminal (10) when said ID information is no longer received by said receiving means.

3. The mobile communication terminal (10) according to Claim 1, wherein
said transmitting means (18) is adapted to transmit the location information of the mobile communication terminal to said transmission destination (24) on regular basis when said ID information is no longer received by said receiving means.

## Patentansprüche

1. Mobilkommunikationsendgerät (10), aufweisend:
eine Sendeeinrichtung (18), die Standortinformation des Mobilkommunikationsendgerätes an ein vorbestimmtes Sendeziel (24) sendet, **gekennzeichnet durch**
eine Kommunikationseinrichtung (12), die ausgebildet ist, um ein Senden von ID-Information von einem Kommunikationsendgerät (26) auf regelmäßiger Basis anzufordern und um vom Kommunikationsgerät (26) gesendete ID-Information zu empfangen; und
wobei die Sendeeinrichtung (18) Standortinformation des Mobilkommunikationsendgerätes an das vorbestimmte Sendeziel (24) sendet, wenn die ID-Information nicht mehr von der Kommunikationseinrichtung (12) empfangen wird.

2. Mobilkommunikationsendgerät (10) nach Anspruch 1, das weiter eine Funktionseinschränkungseinrichtung (14) aufweist, welche die Funktion des Mobilkommunikationsendgerätes (10) einschränkt, wenn die ID-Information von der Empfangseinrichtung nicht mehr empfangen wird.

3. Mobilkommunikationsendgerät (10) nach Anspruch 1, bei dem
die Sendeeinrichtung (18) ausgebildet ist, die Standortinformation des Mobilkommunikationsendgerätes an das Sendeziel (24) auf regelmäßiger Basis zu senden, wenn die ID-Information von der Empfangseinrichtung nicht mehr empfangen wird.

## Revendications

1. Terminal de communication mobile (10) comprenant :
des moyens de transmission (18) pour transmettre des informations de position du terminal de communication mobile à une destination de transmission prédéterminée (24), **caractérisé par** des moyens de communication (12) capables de demander la transmission 'informations d'identité d'un terminal de communication (26) de façon régulière, et de recevoir les informations d'identité transmises par le terminal de communication (26), et les moyens de transmission (18) pour transmettre les informations de position du terminal de communication mobile à la destination de transmission prédéterminée (24) lorsque lesdites informations d'identité ne sont plus reçues par lesdits moyens de communication (12).

2. Terminal de communication mobile (10) selon la revendication 1, comprenant en outre des moyens limiteurs de fonction (14) pour limiter la fonction du terminal de communication mobile (10) lorsque lesdites informations d'identité ne sont plus reçues par lesdits moyens de réception.

3. Terminal de communication mobile (10) selon la revendication 1, dans lequel lesdits moyens de transmission (18) sont capables de transmettre les informations de position du terminal de communication mobile à ladite destination de transmission (24) de façon régulière lorsque lesdites informations d'identité ne sont plus reçues par lesdits moyens de réception.
